# EUROPEAN PATENT APPLICATION

(11) **EP 2 535 836 A2**
(43) Date of publication of application: **19.12.2012**
(21) Application number: 12169906.0
(22) Date of filing: 30.05.2012
(51) Int. Cl.: G06F 21/20

(54) **Information processing apparatus, server apparatus, information processing method, and program**

(30) Priority: 13.06.2011 JP 2011131293
(71) Applicant: Sony Corporation, Tokyo 108-0075 (JP)
(72) Inventor: Shimakawa, Masato, Minato-ku, Tokyo 108-0075 (JP)
(74) Representative: Carlick, Anthony Julian

(57) **Abstract**

A control section is configured to control a communication section to establish a safe communication path with a server apparatus connected to a first network, and to transmit user identification information and first device identification information to the server apparatus for registration in the server apparatus, the user identification information identifying a user of the information processing apparatus, the first device identification information identifying the information processing apparatus, to make a search for at least one device connected to a second network, and to receive second device identification information identifying the device, to transmit, to the server apparatus, together with the received second device identification information, setting request information asking the at least one device for association settings between the information processing apparatus and the at least one device, and to receive, from the server apparatus, response information transmitted by the device in response to the setting request information.

## Description

The present technology relates to an information processing apparatus, a server apparatus, an information processing method and program.

For linkages of an information processing apparatus with other apparatuses via network services, i.e., cloud computing, a user has previously input his user ID and password in every target device expected for the linkages. The user ID and password are those used for access control to services. As an example, Japanese Patent Application Laid-open No. 2007-304849 (see paragraph 0108, etc.) (hereinafter, referred to as Patent Document 1) describes processing of group registration after authentication. To be specific, when an information processing apparatus A sends an account creation request to a manager server, a user ID and a password are issued for access to the manager server. Using the user ID and the password, another information processing apparatus B sends a group registration request to the manager server. In response thereto, group registration processing is performed after authentication.

Such an approach seems natural when a user ID and a password are set in advance on any target service as a user account, when any device in use is provided with input means such as keyboard, and when a user operation is the trigger for access to the device or the service.

However, the above-mentioned approach is not necessarily appropriate any more due to the recent widespread use of network service/cloud computing, and the availability of devices provided with the network functions as well as PCs (Personal Computers).

As an exemplary concern, such a network-function-provided device available for linkages with others is not often provided with input means such as keyboard, e.g., digital photo frame or healthcare device. With such a device, however, a user is expected to input his user ID and password using very limited number of buttons or a virtual keyboard, and this is a disadvantage in terms of usability.

Another concern is that when a user wants to use a large number of devices through linkages thereamong, the user is expected to input his user ID and password to every device, thereby resulting in a disadvantage of putting a large burden on him. To get around such a disadvantage of often asking the user to input his user ID and password, the proposed approach now in practical use is to ask a user to input his user ID and password in every device only once, and the user ID and password are recorded on all devices concerned. With such an approach, however, the user ID and password exist on a plurality of devices in the form ready for conversion to plain text. This causes another disadvantage of greatly reducing the security level of the system in its entirety.

It is thus desirable to provide an information processing apparatus, a server apparatus, an information processing method, and a program with which linkage functions with other devices are easily set with the security level remained high.

The present technology relates to an information processing apparatus capable of communicating with other information processing apparatuses, a server apparatus capable of communicating with the information processing apparatus, and an information processing method and a program in the information processing apparatus.

Various respective aspects and features of the invention are defined in the appended claims. Combinations of features from the dependent claims may be combined with features of the independent claims as appropriate and not merely as explicitly set out in the claims.

According to an embodiment of the present technology, there is provided an information processing apparatus, including a communication section configured to be connectable to a first network and a second network, and a control section. The control section is configured to be able to control the communication section to establish a safe communication path with a server apparatus connected to the first network, and to transmit user identification information and first device identification information to the server apparatus for registration in the server apparatus, the user identification information identifying a user of the information processing apparatus, the first device identification information identifying the information processing apparatus. The control section is configured to be able to control the communication section to make a search for at least one device connected to the second network, and to receive second device identification information identifying the device. The control section is configured to be able to control the communication section to transmit, to the server apparatus, together with the received second device identification information, setting request information asking the at least one device for association settings between the information processing apparatus and the at least one device. The control section is configured to be able to control the communication section to receive, from the server apparatus, response information transmitted by the device in response to the setting request information.

With the information processing apparatus as such, the linkage functions with other devices are easily set without impairing the security. After the completion of association settings as above, the information processing apparatus becomes able to be in communications with the devices without restraint over the safe communication path via the server apparatus.

The information processing apparatus may further include a display section, and an operation accepting section configured to accept an operation of the user. The control section is configured to be able to control the display section to display information about the at least one device found by the search. The control section is configured to be able to control the communication section to transmit the setting request information when an operation is accepted for selecting a target device from the displayed information for transmission of the setting request information. The control section is configured to be able to control the display section to, when the response information is received, change a display state of information about the selected device.

As such, with the simple approach of making the user select any device for association settings on the display section, the information processing apparatus configured as above is able to transmit the setting request information to the selected device via the server apparatus. Moreover, when the response information is received, the information processing apparatus changes the display state of information indicating the selected device so that the user easily knows the completion of the association settings.

The control section is configured to be able to control the display section to display a plurality of pieces of type information each indicating an association type with the device. The control section is configured to be able to control the communication section to, when an operation is accepted for making a selection of one piece of type information from the displayed plurality of pieces of type information, transmit the setting request information together with the selected type information.

The information processing apparatus configured as such is thus able to make association settings with devices together with the association types. Herein, the association type denotes the level of access authority, but this is surely not restrictive.

The control section is configured to be able to control the display section to display a first area displaying an object indicating the at least one device found by the search, and a second area provided to each of the association types. The control section is configured to be able to control the communication section to, when an operation of drag-and-drop is accepted for the object displayed in the first area to the second area, transmit the setting request information together with the type information indicating the association type corresponding to the second area.

As such, with the simple operation of drag-and-drop from the first area to the second area, the information processing apparatus configured as above makes the user specify the association type.

The control section is configured to be able to control the communication section to transmit, in a case where a device done with the association settings is connected to a third network other than the first network and the second network, search request information, the search request information asking the device to make a search for another device connected to the third network, and if found, to send back device identification information about the other device. The control section is configured to be able to control the communication section to receive the device identification information about the other device sent by the device in response to the search request information. The control section is configured to be able to control the communication section to transmit, to the server apparatus, together with the received device identification information about the other device, setting request information asking the other device for the association settings between the information processing apparatus and the other device.

As such, when there is any device done with the association settings in any other network not of its own, the information processing apparatus configured as above is able to establish association with any other devices in the other networks via the device.

The server apparatus may be configured to receive, from another device connected to a third network other than the first network and the second network, position information about the other device and device identification information about the other device, and to store the position information and the device identification information. The control section is configured to be able to control the communication section to transmit, to the server apparatus, search request information asking for a search for a device near a position indicated by the position information. The control section is configured to be able to control the communication section to receive device identification information about a device found near the position, the identification information being transmitted by the server apparatus in response to the search request information. The control section is configured to be able to control the communication section to transmit, to the server apparatus, together with the received device identification information, the setting request information asking the device near the position for the association settings between the information processing apparatus and the device near the position.

As such, through specification of the position information, the information processing apparatus configured as above becomes ready for the association settings not only for devices in the same network but also a whole category of others outside the network.

According to another embodiment of the present technology, there is provided a server apparatus, including a communication section configured to be connectable to a first network, and a control section. The control section is configured to be able to control the communication section to establish a safe communication path with an information processing apparatus connected to the first network, and to receive user identification information and first device identification information from the information processing apparatus for registration in the server apparatus, the user identification information identifying a user of the information processing apparatus, the first device identification information identifying the information processing apparatus. The control section is configured to be able to control the communication section to receive, from the information processing apparatus, second device identification information and setting request information, the second device identification information identifying at least one device found by the information processing apparatus through a search for devices connected to a second network different from the first network, the second device identification information being obtained by the information processing apparatus, the setting request information asking the at least one device for association settings between the information processing apparatus and the at least one device. The control section is configured to be able to control the communication section to transmit the received setting request information to the at least one device. The control section is configured to be able to control the communication section to receive response information transmitted from the at least one device in response to the setting request information. The control section is configured to be able to control the communication section to transmit the received response information to the information processing apparatus.

According to still another embodiment of the present technology, there is provided an information processing method in an information processing apparatus, comprising establishing a safe communication path with a server apparatus connected to a first network, and transmitting user identification information and first device identification information to the server apparatus for registration in the server apparatus, the user identification information identifying a user of the information processing apparatus, the first device identification information identifying the information processing apparatus, receiving second device identification information identifying at least one device connected to a second network different from the first network found through a search, transmitting, to the server apparatus, together with the received second device identification information, setting request information asking the at least one device for association settings between the information processing apparatus the at least one device, and receiving, from the server apparatus, response information transmitted by the at least one device in response to the setting request information.

According to still another embodiment of the present technology, there is provided a program causing an information processing apparatus to establish a safe communication path with a server apparatus connected to a first network, and to transmit user identification information and first device identification information to the server apparatus for registration in the server apparatus, the user identification information identifying a user of the information processing apparatus, the first device identification information identifying the information processing apparatus, to receive second device identification information identifying at least one device connected not to a second network different from the first network found through a search, to transmit, to the server apparatus, together with the received second device identification information, setting request information asking the at least one device for association settings between the information processing apparatus the at least one device, and to receive, from the server apparatus, response information transmitted by the at least one device in response to the setting request information.

According to the present technology, linkage functions with other devices are easily set with the security level remained high.

These and other features and advantages of the present disclosure will become more apparent in light of the following detailed description of best mode embodiments thereof, as illustrated in the accompanying drawings.

Embodiments of the disclosure will now be described with reference to the accompanying drawings, throughout which like parts are referred to by like references, and in which:
Fig. 1 is a schematic view of a device-to-device association-establishing system in a first embodiment of the present technology;
Fig. 2 is a block diagram showing the hardware configuration of a server, a user-side device, and a setting-target device in the first embodiment;
Fig. 3 is a diagram showing exemplary entries to be created when association is established between a user and the user-side device;
Fig. 4 is a diagram showing an exemplary user interface of an association setting mechanism using a device done with registration (the user-side device);
Fig. 5 is a process flowchart of the user-side device for association settings;
Fig. 6 is a process flowchart of the server for the association settings;
Fig. 7 is a process flowchart of the setting-target device for the association settings;
Fig. 8 is a diagram showing exemplary entries to be created when association is established between the user-side device and the setting-target device;
Figs. 9A and 9B are each a diagram showing an exemplary user interface when a plurality of association types are used;
Figs. 10A and 10B are each a diagram showing another user interface when a plurality of association types are used;
Fig. 11 is a diagram showing exemplary entries to be created when association is established between the user-side device and the setting-target device on a type basis;
Fig. 12 is a block diagram showing the hardware configuration of each device configuring a system in a second embodiment;
Fig. 13 is a block diagram showing the hardware configuration of each device configuring a system in a third embodiment;
Fig. 14 is a schematic view of a system in a fourth embodiment;
Figs. 15A to 15C are each a diagram showing an exemplary user interface in a process of association settings using a remote search request mechanism in the fourth embodiment;
Fig. 16 is a process flowchart of a user-side device in the fourth embodiment;
Fig. 17 is a process flowchart of a setting-target device in the fourth embodiment;
Fig. 18 is a schematic view of a system in a fifth embodiment;
Fig. 19 is a process flowchart of a setting-target device in the fifth embodiment;
Fig. 20 is a process flowchart of a server in the fifth embodiment;
Fig. 21 is a process flowchart of a user-side device in the fifth embodiment;
Fig. 22 is a schematic view of a system in a sixth embodiment;
Fig. 23 is a process flowchart of a user-side device in a seventh embodiment; and
Fig. 24 is a process flowchart of a setting-target device in the seventh embodiment.

Hereinafter, embodiments of the present technology will be described with reference to the accompanying drawings.

### [First Embodiment]

First of all, a first embodiment of the present technology is described.

### [Network Overview]

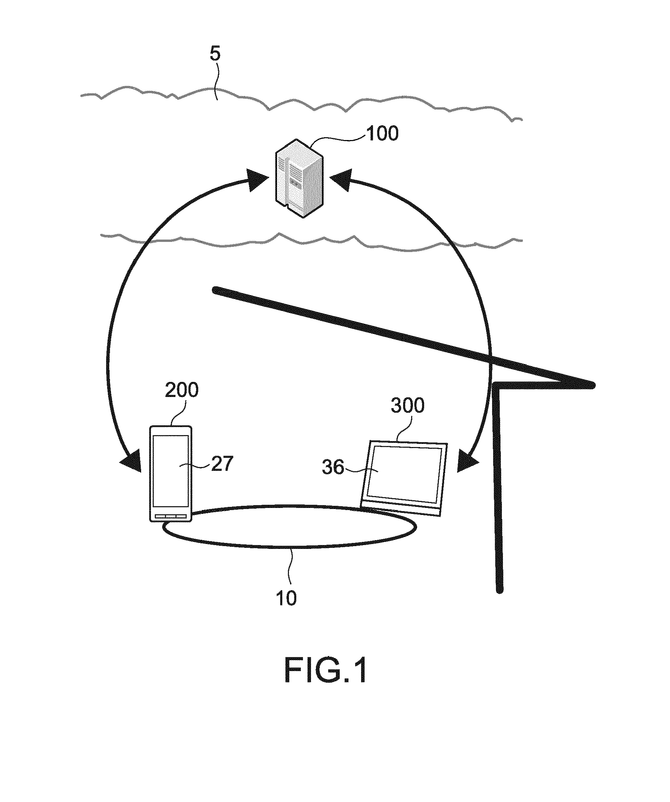

Fig. 1 is a schematic view of a device-to-device association-establishing system in a first embodiment of the present technology. As shown in Fig. 1, this system is configured to include a server 100, a user-side device 200, and a setting-target device 300.

The server 100 is provided on a wide area network 5 exemplified by the Internet, and is capable of communicating with the user-side device 200 and the setting-target device 300. Although the details will be given later, in this embodiment, the server 100 first reserves a safe communication path with the user-side device 200, and registers association between the user-side device 200 and the user thereof. Thereafter, the user-side device 200 and the setting-target device 300 communicate with each other to establish association settings via the server 100 over the safe communication path.

The user-side device 200 and the setting-target device 300 are exemplified by a whole category of information processing apparatuses, e.g., smartphone, mobile phone, tablet PC, PDA (Personal Digital Assistant), portable AV (Audio Visual) player, electronic book, digital photo frame, television receiver (TV), PVR (Personal Video Recorder), notebook PC, desktop PC, HDD (Hard Disk Drive) device, camcorder, digital camera, game machine, projector, healthcare device, and household appliances.

The user-side device 200 is a target device for user operation. Fig. 1 shows a smartphone as an example. The setting-target device 300 is a device the user wants to have linkage functions (association) with the user-side device 200. Fig. 1 shows a digital photo frame as an example. Fig. 1 shows only one setting-target device 300, but a plurality of setting-target devices 300 are also possible in the system.

Over the safe communication path described above, the user-side device 200 sends an association setting request to the setting-target device 300 via the server 100, and the setting-target device 300 responds to the setting request, i.e., acceptance or rejection.

The user-side device 200 and the setting-target device 300 are connected to a home network (LAN; Local-Area Network) 10 in a home, for example, and are capable of communicating with each other based on the standards such as WiFi (Wireless Fidelity) or DHCP-IP (Digital Transmission Content Protection over Internet Protocol). The user-side device 200 and the setting-target device 300 are to automatically find network settings by the DHCP-IP, and are to be connected to each other via the server 100 and over the wide area network 5 described above.

In the below, the user-side device 200 and the setting-target device 300 are sometimes collectively referred to as "devices" with no distinction therebetween. [Hardware Configuration of Each Device]

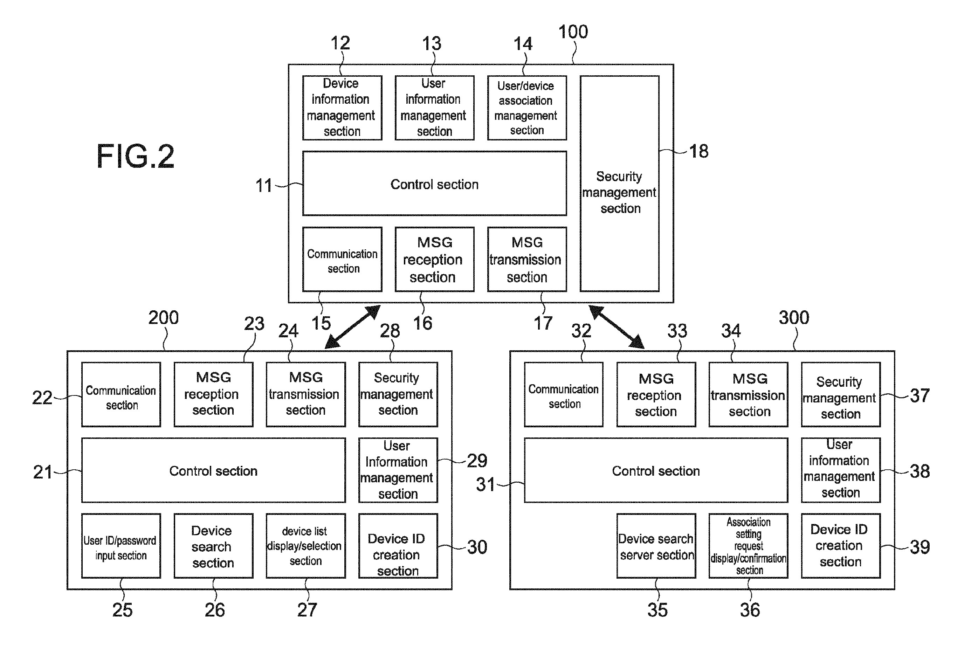

Fig. 2 is a block diagram showing the hardware configurations of the server 100, the user-side device 200, and the setting-target device 300.

### [Hardware Configuration of Server]

As shown in Fig. 2, the server 100 is configured to include a control section (CPU; Central Processing Device) 11, a device information management section 12, a user information management section 13, a user/device association management section 14, a communication section 15, a message reception section 16, a message transmission section 17, and a security management section 18. Other than these components, the server 100 is provided with storage, e.g., HDD or nonvolatile memory, storing OS (Operating System) or other types of software (applications), and various types of data.

The control section 11 executes control over each of the blocks in the server 100, and receives/sends messages from/to the user-side device 200 and the setting-target device 300. As to the messages sent to the server 100, the control section 11 sends these to each appropriate block, and goes through a process for database access, for example.

The device information management section 12 manages, as a database, setting information about names or others of the user-side device 200 and the setting-target device 300, between which association is established.

The user information management section 13 manages, as a database, information about a user such as a user ID and a password.

The user/device association management section 14 manages association-establishing information between the user, and the user-side device 200 and the setting-target device 300. The association establishment between the user and the devices is classified by association type as Owner/Family/Friend/Guest. The user/device association management section 14 stores a set of user/device/association type as entries for the association-establishing information.

The communication section 15 accepts connection from the user-side device 200 and the setting-target device 300. The communication section 15 performs an authentication process when starting the connection with the user-side device 200. In other words, the communication section 15 confirms a device certificate provided by the user-side device 200 to confirm whether the user-side device is the authorized device or not. The communication section 15 sends a server certificate to the user-side device 200 to inform the user-side device 200 of the fact that the server 100 is the authorized device. After the authentication process as such, the communication section 15 goes through a process of key exchange for the use with encrypted communications later, and obtains device IDs. As such, thereafter, the communication section 15 offers the function of performing communications through a selection of connection based on the device IDs.

The message reception section 16 stores the messages received via the communication section 15 in order, and provides these messages to the control section 11.

The message transmission section 17 stores the messages provided by the control section 11 in order, and sends these messages to each target device via the communication section 15.

The security management section 18 manages information about the security of the system in the embodiment. The security management section 18 also stores the server certificate.

### [Hardware Configuration of User-side Device]

As shown in Fig. 2, the user-side device 200 is configured to include a control section 21, a communication section 22, a message reception section 23, a message transmission section 24, a user ID/password input section 25, a device search section 26, a device list display/selection section 27, a security management section 28, a user information management section 29, and a device ID creation section 30. Other than these components, the user-side device 200 is provided with storage, e.g., HDD or nonvolatile memory, storing OS or other types of software (applications), or various types of data. In this embodiment, the application for the association setting process is sometimes referred to as "association setting application" hereinafter.

The control section 21 executes control over each of the blocks in the user-side device 200, thereby implementing the functions as the user-side device 200 for the device-to-device association settings.

The communication section 22 establishes connection with the server 100. The communication section 22 performs the authentication process described above when the connection is started. That is, the communication section 22 sends a device certificate to inform the server 100 of the fact that the user-side device 200 is the authorized device, and receives a server certificate from the server 100 to confirm whether the server 100 is the authorized device. After the completion of this authentication process, the communication section 22 goes through a process of key exchange for the use with encrypted communications later, and sends the device ID. As such, thereafter, the communication section 22 offers the function of performing communications with the server based on the device ID.

The message reception section 23 stores the messages received from the server 100 in order, and provides the messages to the control section 21.

The message transmission section 24 stores the messages provided by the control section 21 in order, and sends these messages to the server 100 via the communication section 22.

The user ID/password input section 25 offers the function of user ID/password input to have the user-side device 200 listed as a registered device being a base for using the functions of device-to-device association settings. In other words, the user ID/password input section 25 is an operation accepting section exemplified by a keyboard or a touchscreen.

The device search section 26 provides the function of a device search for displaying a list of devices that are the targets for the device-to-device association settings. In this embodiment, as means for the device search as such, the device search section 26 uses the SSDP (Simple Service Discovery Protocol) of the UPnP DA (Universal Plug and Play Device Architecture). With the SSDP, each device uses the UPnP to advertise Device Description including the device functions on the network. The remaining other devices receive this Device Description, thereby obtaining information about which device provides which functions. In this embodiment, each of the devices uses the SSDP to advertise its device ID. Each of the devices obtains a device list based on the advertised device IDs.

Based on the device list obtained by the device search section 26, the device list display/selection section 27 shows the user a list of devices available for the association settings, and also provides the function with which the user specifies a target device in the list. The device list display/selection section 27 is exemplified by an LCD (Liquid Crystal Display) or an OELD (Organic Electro Luminescence Display), and may be a single piece with a touchscreen.

The security management section 28 manages information about the security of the system in this embodiment. The security management section 28 stores the device certificate described above.

The user information management section 29 manages user information, which is obtained by the device-to-device association settings. When the association settings are not in progress, it means that the device is not in association with any user, and this block thus stores no user information.

The device ID creation section 30 creates a device ID with which the device is uniquely identified. In this embodiment, the device ID creation section 30 ensures the uniqueness by creating the device ID based on a MAC (Media Access Control) address on the communication section 22.

### [Hardware Configuration of Setting-Target Device]

As shown in Fig. 2, the setting-target device 300 is configured to include a control section 31, a communication section 32, a message reception section 33, a message transmission section 34, a device search server section 35, an association setting request display/confirmation section 36, a security management section 37, a user information management section 38, and a device ID creation section 39. Other than these components, the setting target device 300 is provided with storage, e.g., HDD or nonvolatile memory, storing OS or other types of software (applications), or various types of data.

The control section 31 executes control over each of the blocks in the setting-target device 300, thereby implementing the functions as a target device for the device-to-device association settings.

The device search server section 35 offers the server function for a device search. In this embodiment, the device search section 35 advertises the device ID using the function of an SSDP server.

The association setting request display/confirmation section 36 offers the function of message display and user confirmation via the server 100 about the association setting request sent from the user-side device 200, i.e., displays a message confirming the user whether to accept the request or not, and obtains the user's confirmation. The message is "Received association setting request from Mr. XX. Accept?", for example, but this is surely not restrictive.

The user information management section 38 manages the user information obtained by the association settings. When the association settings are not in progress, it means that the device is not in association with any user, and this block thus stores no user information.

The remaining components, i.e., the communication section 32, the message reception section 33, the message transmission section 34, the security management section 37, and the device ID creation section 39, are provided with the functions similar to their corresponding components in the user-side device 200 described above.

The blocks described above may be at least partially implemented by software.

### [System Operation]

Described next is the operation of the components configured as above, i.e., the server 100, the user-side device 200, and the setting-target device 300. The operation described below is mainly of the control sections of these devices, and is performed in cooperation with other blocks in each corresponding device, and software (applications).

### [Operation Overview]

The example of Fig. 1 above shows a case where a user has a smartphone, i.e., the user-side device 200, and a newly-bought network-connectable photo frame, i.e., the setting-target device 300, both of which are in the ON state. The user-side device 200 and the setting-target device 300 are assumed as being connected to the server 100 over the network with the network settings automatically obtained by the WiFi network connection function and the DHCP-IP.

### [Security Mechanism]

When the network functions are activated, the user-side device 200 first goes through a process for connection with the server 100, and then establishes a safe communication path with the server 100 to ensure the security.

First of all, the server 100 transmits the server certificate embedded therein in advance to the user-side device 200, and then the user-side device 200 verifies the signature thereof to confirm whether or not to authenticate the server 100. When there is no problem in this authentication, the user-side device 200 transmits the device certificate to the server 100, and the server 100 then verifies the signature thereof to confirm whether or not to authenticate the user-side device 200. When there is no problem in this authentication, the server 100 and the user-side device 200 go through a process of key exchange therebetween to make a shared key available for their use for encryption of later communications. After this, the communications is performed securely using the shared key, i.e., a safe communication path is established.

As such, by using the certificates respectively embedded in advance in the server 100 and the user-side device 200, a secure communication path is established with no more dependence on a user ID and a password. That is, in this embodiment, the security mechanism is constructed on a device basis.

As to the authentication/key exchange algorithm described above, various approaches have been proposed, and although any of the approaches will do, used in this embodiment is SSL/TLS (Secure Socket Layer/Transport Layer Security) with server/client certificates.

The communications after this is performed on this safe communication path. Because the server 100 receives/sends messages from/to the devices, the devices are to exchange messages safely with no restraint by using the device IDs as destinations.

### [User-Device Association Registration in User-Side Device]

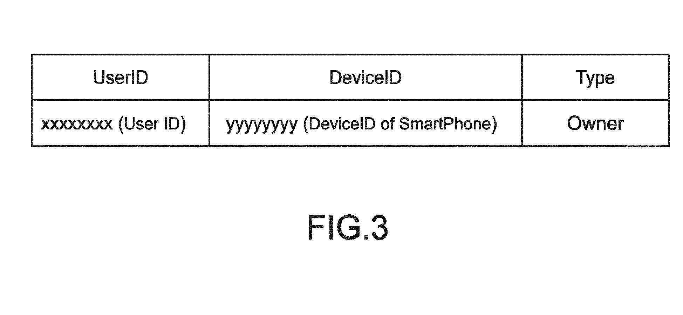

Before using the device-to-device association setting mechanism, a user is expected to make user/device association settings (registration) for at least one device. In this embodiment, the user information management section 13 of the server 100 is assumed to store in advance information about user IDs and passwords. The user goes through user authentication by inputting his user ID and password on the user-side device 200, e.g., smartphone, thereby establishing association between the user and the user-side device 200. With the association established as such, such entries as shown in FIG. 3 are created in the user/device association management section 14 of the server 100. As shown in FIG. 3, these entries are respectively recorded with the user ID, the device ID, and the association type. As to the association between the user and the user-side device 200, the association type is "Owner". Similarly, the user information management section 29 of the user-side device 200 is recorded with the user ID.

### [Association Setting Mechanism using Registered Device]

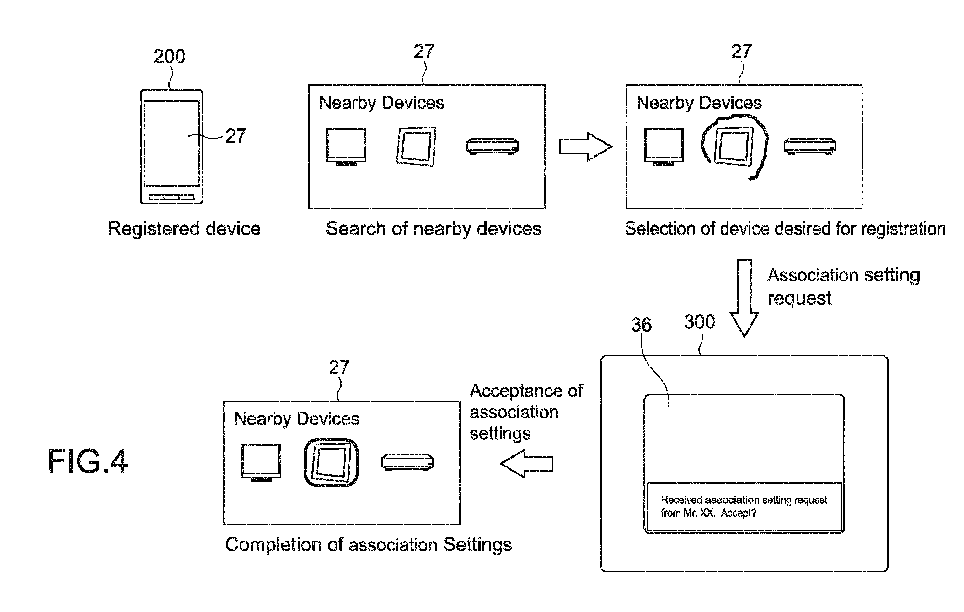

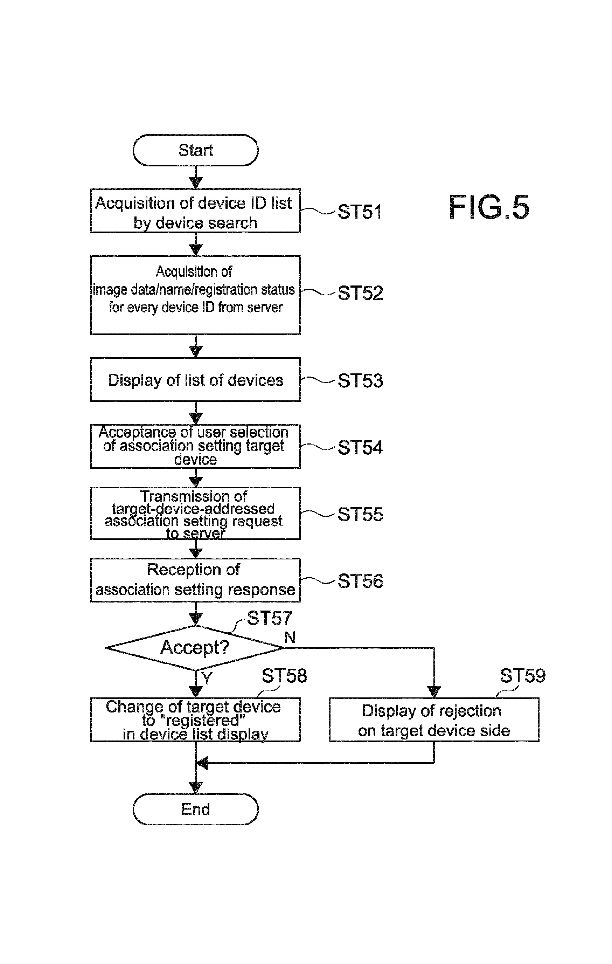

Fig. 4 is a diagram showing an exemplary user interface of an association setting mechanism using the registered device described above, i.e., the user-side device 200. Figs. 5, 6, and 7 are process flowcharts respectively of the user-side device 200, the server 100, and the setting-target device 300 for the association settings.

As shown in Fig. 4, when the user activates an association setting application on the user-side device 200, i.e., smartphone, the control section 21 of the user-side device 200 makes a device search, and displays a list of devices located nearby, i.e., within the home network 10, on the device list display/selection section 27 (step 53 of Fig. 5). The devices in the list are displayed by image information each indicating the device, i.e., icons (refer to Fig. 4).

By the device search as such, the control section 21 obtains a device ID list of the devices located nearby (step 51 of Fig. 5). The server 100 is recorded in advance with image data of each device, and information about each device such as device name given beforehand, e.g., "Dad's TV" and "PC in family room". The control section 21 obtains such information by separately sending an inquiry message to the server 100 (step 52 of Fig. 5).

When the displayed device list includes any device the user desires for the association settings, the user selects the device, and instructs the control section 21 to start the association setting process (step 54 of Fig. 5). When the device list display/selection section 27 is a single piece with a touchscreen, the user's selection is made by touching or circling the corresponding image using a touch pen or the user's finger, for example (refer to Fig. 4).

Next, the control section 21 creates an association setting request addressed to the selected device, and sends the request to the server 100 (step 55 of Fig. 5). This association setting request includes the device ID of the setting-target device 300.

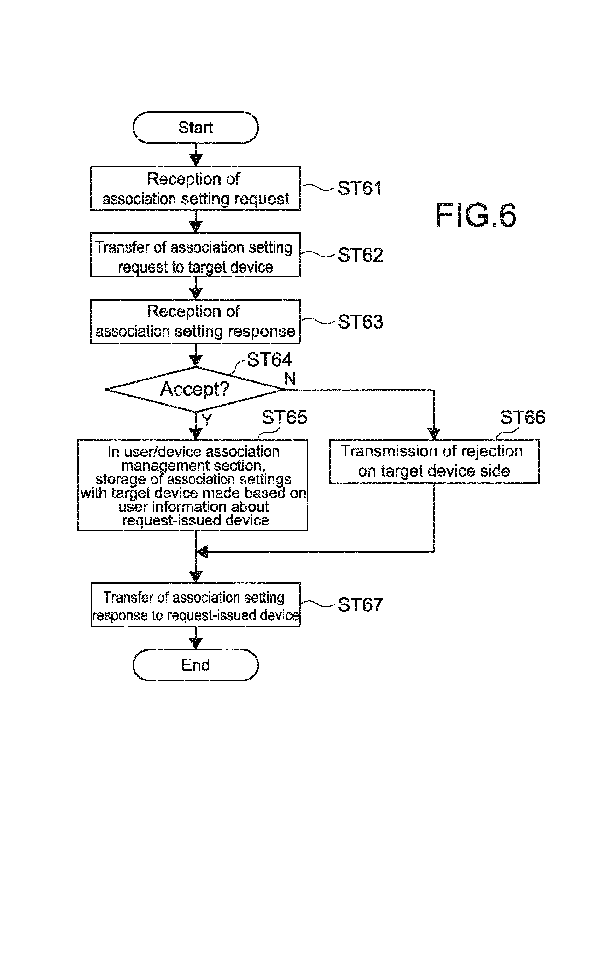

Upon reception of the association setting request (step 61 of Fig. 6), the control section 11 of the server 100 transfers the request to the setting-target device 300, e.g., digital photo frame, in accordance with the addressed device ID (step 62 of Fig. 6).

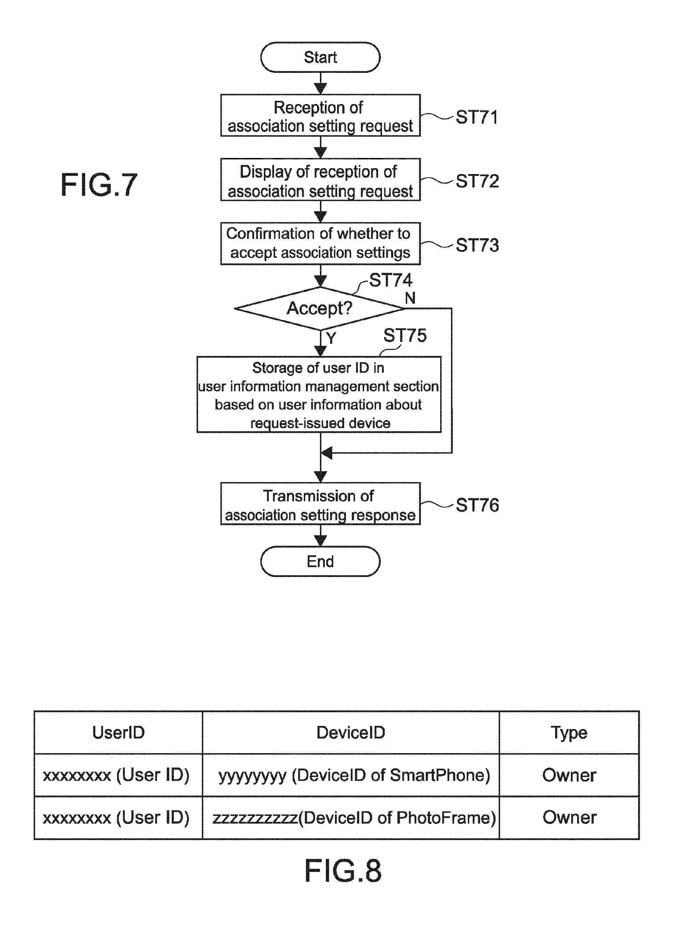

Upon reception of the association setting request (step 71 of Fig. 7), based thereon, the control section 31 of the setting-target device 300 displays a message asking for the user's confirmation on the association setting request display/confirmation section 36 (steps 72 and 73 of Fig. 7). The message is like "Received association setting request from Mr. XX. Accept?" (refer to Fig. 4), for example.

When the user accepts the request through operation of buttons or others provided to the digital photo frame, for example (Yes in step 74 of Fig. 7), the control section 31 stores the user ID in the user information management section 38 based on the user information about the user-side device 200 where the request is issued (step S75 of Fig. 7).

The control section 31 of the setting-target device 300 then creates an association setting response, and transmits the response to the server 100 (step 76 of Fig. 7). The association setting response includes, as the specified address, the device ID of the user-side device 200 where the association setting request is issued.

Upon reception of the association setting response (step 63 of Fig. 6), the control section 11 of the server 100 determines whether this is the response to accept the association settings or not (step 64 of FIG. 6).

When the response is to accept the request (Yes in step 64), the control section 11 creates corresponding entries in the user/device association management section (step 65 of Fig. 6). Fig. 8 is a diagram showing an example of the entries. As shown in Fig. 8, in comparison with Fig. 3 referred to in the above, the user ID is newly in association with the digital photo frame being the setting-target device 300.

On the other hand, when the response is to reject the request (No in step 64), the control section 11 notifies the user-side device 200 of the response (step 66 of Fig. 6).

When the response is to accept the request, the control section 11 transfers the association setting response to the user-side device 200 in accordance with the device ID specified as the address (step 67 of Fig. 6).

Upon reception of the association setting response (step 56 of Fig. 5), the control section 21 of the user-side device 200 determines whether the response is to accept the request or not (step 57 of Fig. 5).

When the response is to accept the request (Yes in step 57), on the device list display/selection section 27, the control section 21 updates the device list displayed in step 53 above, and displays the selected setting-target device 300 differently this time as the registered device (step 58 of Fig. 5). For such different display, the image of the registered device may be framed, or the image may be changed in color, for example (refer to Fig. 4). To indicate the registered device, image framing or color change as such is surely not the only option, and the display state may be changed in various other ways.

On the other hand, when the response is to reject the request (No in step 57), the control section 21 displays the response on the device list display/selection section 27 (step 59 in Fig. 5).

In this manner, with the minimum number of input of user ID and password, the association settings are accordingly made for association establishment between a user and devices aiming for the server-to-device and device-to-device linkages without impairing the security level.

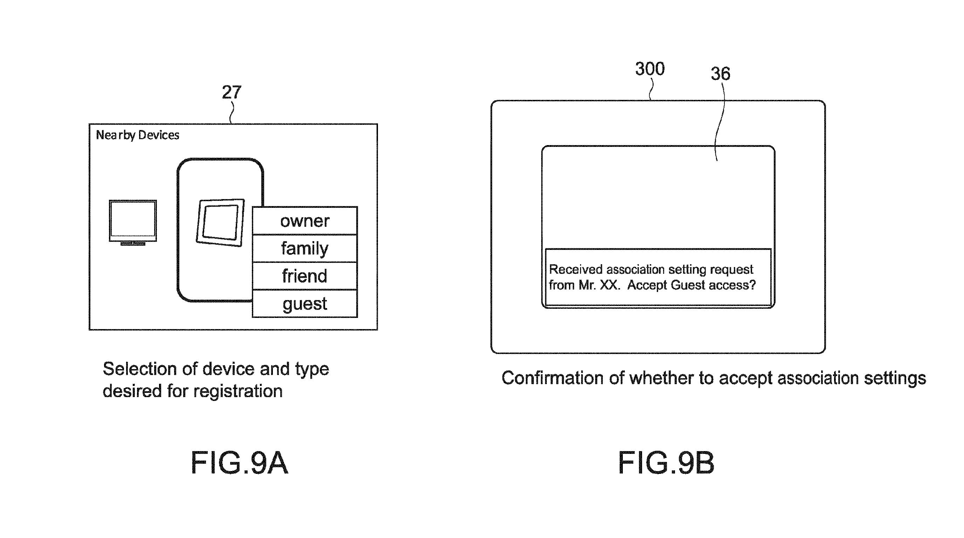

In the above description, the user/device association type is exemplified only by "Owner", but a plurality of other association types may be also possible as described above. Figs. 9A and 9B are each a diagram showing an exemplary user interface with four association types of Owner/Family/Friend/Guest.
As shown in Fig. 9A, when the image information about the setting-target device 300 is selected in the list of found devices described above, the device list display/selection section 27 of the user-side device 200 displays the four association types as above. When the user selects one of these four association types, the control section 21 of the user-side device 200 transmits an association setting request specifically for the selected type.
On the other end, as shown in Fig. 9B, upon reception of the type-specified association setting request as such via the server 100, the control section of the setting-target device 300 displays the request on the association setting request display/confirmation section 36.

With the types provided for association establishment between the devices and the user as such, the user-side device 200 becomes available for detailed settings, e.g., allows a target user to access every function as well as making any setting change, allows another target user to access any function involving data writing but not making any setting change, and allows still another user only to make data display.

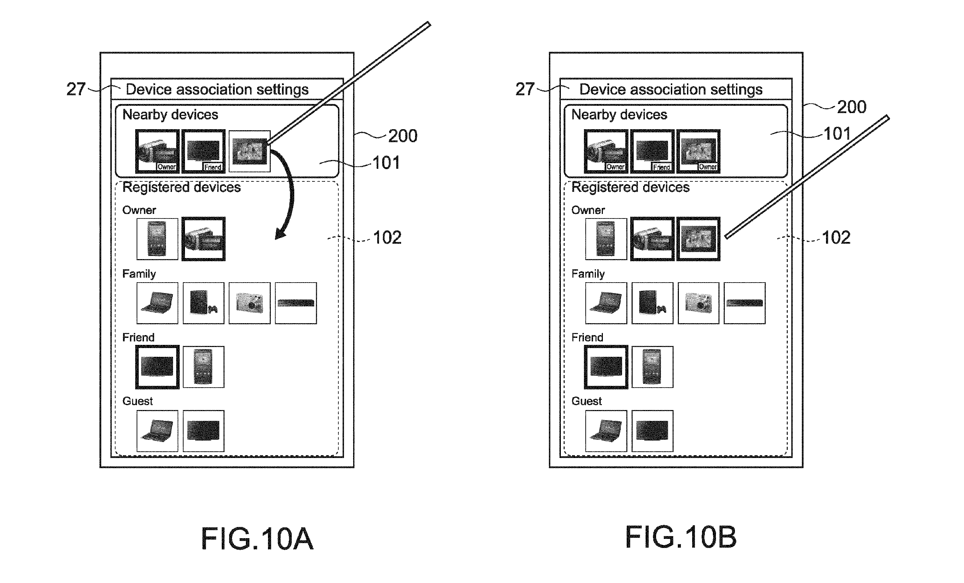

Figs. 10A and 10B are each a diagram showing another exemplary user interface in the user-side device 200 with the four association types of Owner/Family/Friend/Guest as above.

As shown in Fig. 10A, the devices found nearby by the device search described above are displayed in an upper area 101 in the device list display/selection section 27. In the area 101, the images of the devices done with the association settings are each highlighted by being framed, and the images are displayed together with the registered user types.

Moreover, as to the registered devices, their images are displayed by type in a lower area 102 below the area 101. Among these registered devices, the devices found by the device search described above are each highlighted by being framed. The user performs a drag-and-drop operation using a touch pen or his finger, i.e., drags and drops the image of any of the devices displayed in the area 101, the user desires for the association settings, to the portion for the desired association type in the area 102. The type-specified association setting request is then transmitted to the target device.

Upon reception of the association setting response that is to accept the association setting request, as shown in Fig. 10B, image update is performed in both of the areas 101 and 102. To be specific, when the user drags and drops the image of a not-yet-registered device from the area 101 to the position of "Owner" in the area 102, due to the response to accept the request, the image of the not-yet-registered device in the area 101 is highlighted by being framed as is now registered. Moreover, in the area 102, at the position of "Owner", the target image for the drag-and-drop operation is displayed, and the image is highlighted by being framed as the device found nearby.

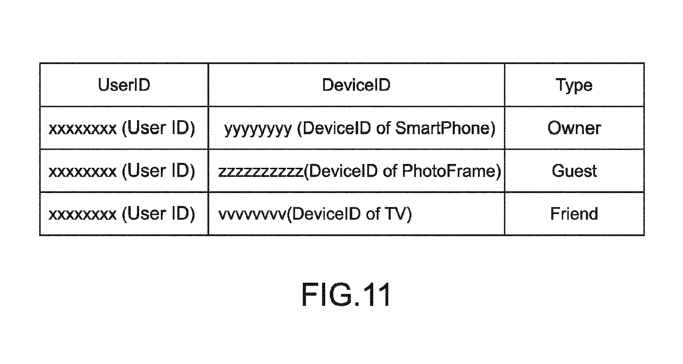

Fig. 11 is a diagram showing exemplary user/device association-establishing information entries when the association settings are completed with the specified type. As shown in Fig. 11, as to the user ID of the user of the user-side device, e.g., smartphone, having the authority of "Owner", the user of a setting-target device 300, e.g., digital photo frame, is in association with the authority of "Guest", and the user of another setting-target device 300, e.g., TV, is in association with the authority of "Friend".

### [Second Embodiment]

Described next is a second embodiment of the present technology.

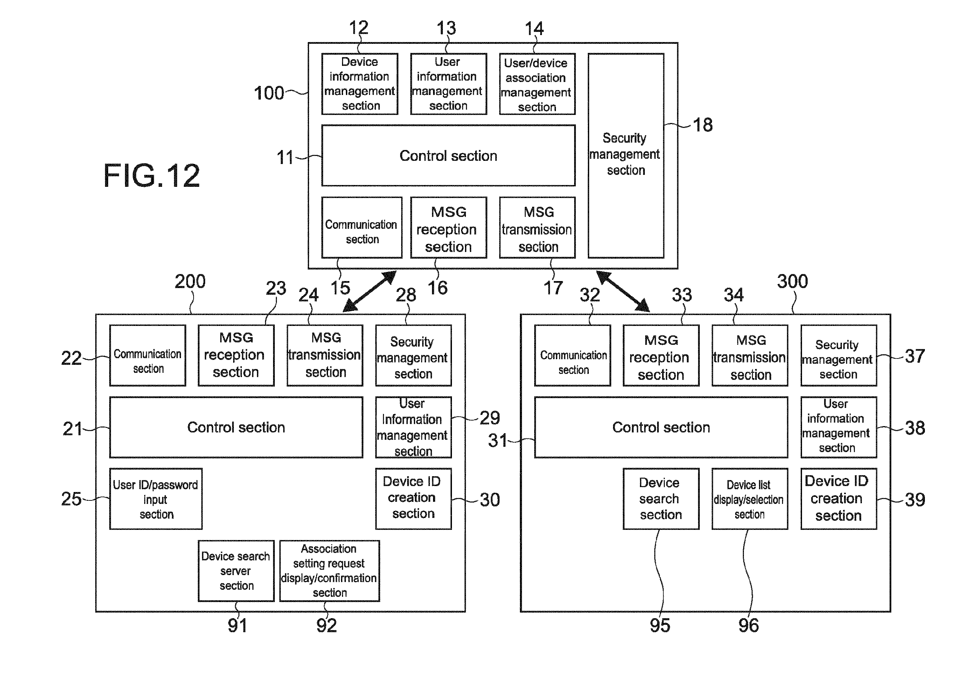

Fig. 12 is a block diagram showing the hardware configuration of the components in this embodiment, i.e., the server 100, the user-side device 200, and the setting-target device 300. In Fig. 12, any block having the same function as that in the first embodiment described above is provided with the same reference numeral.

The device-to-device association setting process in the first embodiment described above is performed in response to an association setting request transmitted from the user-side device 200 to the setting-target device 300. Alternatively, in this second embodiment, the device-to-device association setting process is performed in response to a request from the setting-target device 300.

Therefore, the setting-target device 300 in this embodiment is provided with a device search section 95, and a device list display/selection section 96. The device search section 95 is in charge of a device search, and the device list display/selection section 96 is in charge of accepting a user selection through display of a device list thereon. For correspondence therewith, the user-side device 200 is provided with a device search server section 91, and an association setting request display/confirmation section 92.

When a user selects any registered device from the images of devices displayed in the device list for use as a setting base, i.e., the user-side device 200, an association setting request is sent to the user-side device 200 via the server 100. When the user-side device 200 makes a response to accept the association setting request, the association settings are accordingly made similarly to those in the first embodiment described above.

### [Third Embodiment]

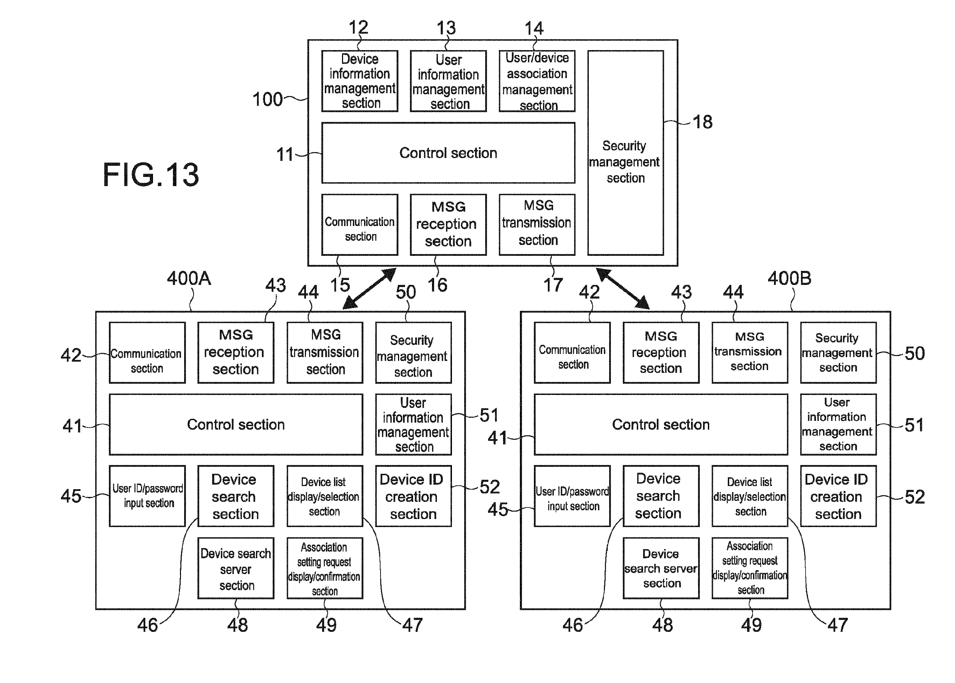

Described next is a third embodiment of the present technology by referring to Fig. 13.

In this third embodiment, unlike in the embodiments described above, the distinction is not made between the user-side device 200 and the setting-target device 300, and the both devices are made available for the user's initial registration/association setting operation. Therefore, devices herein (devices 400A and 400B) each include the blocks provided in both the user-side device 200 and the setting-target device 300 described in the embodiments above.

As such, the device-to-device association settings are made by the user with good flexibility because the devices are not defined by function in advance.

### [Fourth Embodiment]

Described next is a fourth embodiment of the present technology.

In the embodiments described above, for a device search, the user-side device 200 and the setting-target device 300 use only the device/service discovery mechanism by the SSDP or others on the local network. If this is the case, however, only devices locating near the registered device are the registration targets for the user-side device 200 and the setting-target device 300.

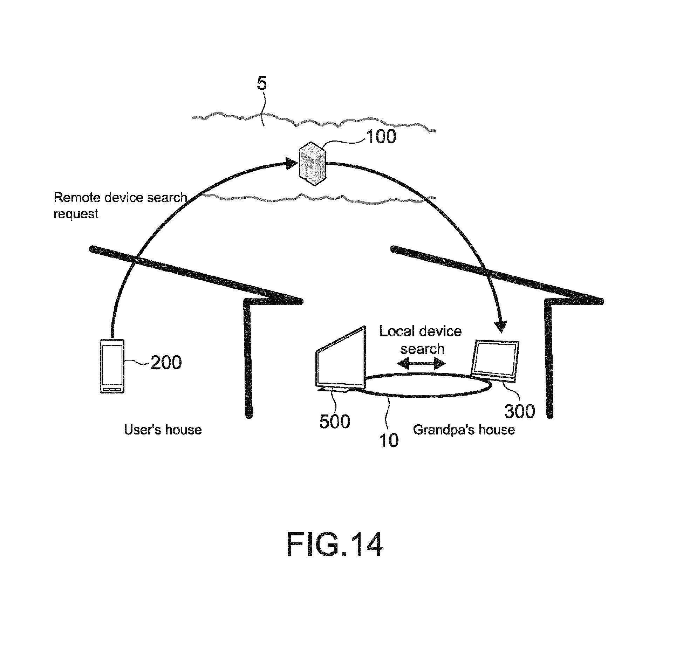

In consideration thereof, in this fourth embodiment, a remote device search request mechanism is in use. Fig. 14 is a schematic view of a system in this embodiment.

Assuming here is a case that a user is already done with association settings for the user-side device 200, e.g., smartphone, and a setting-target device 300. The association settings were done when the user was in his grandpa's house with the user-side device 200, e.g., smartphone, and the setting-target device 300 is the one found by a device search mechanism using the network in the grandpa's house.

In this case, the user-side device 200 is allowed, wherever it is, to transmit messages to the setting-target device 300 via the server 100. Therefore, as shown in Fig. 14, the user-side device 200 transmits a request asking the registered setting-target device 300, i.e., photo frame, to send a device list by making a search for devices nearby.

With the request as such, the user-side device 200 may find a setting-target device 500, e.g., TV, which is a new addition in the grandpa's house by the device search. The setting-target device 500 found as such is thus regarded as a target for the association settings as is the setting-target device 300 in the embodiments described above.

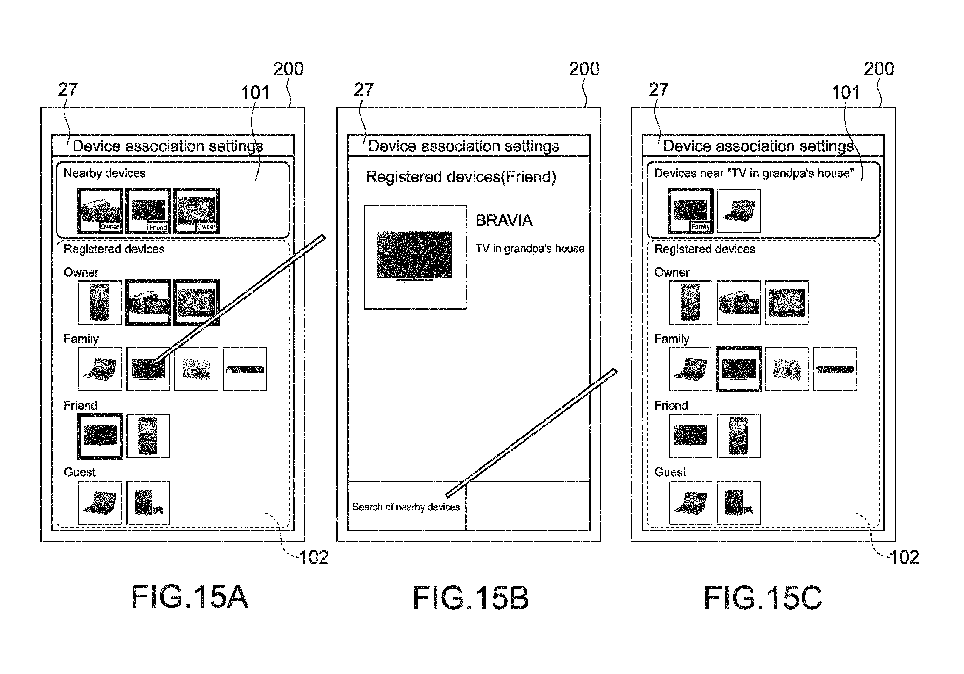

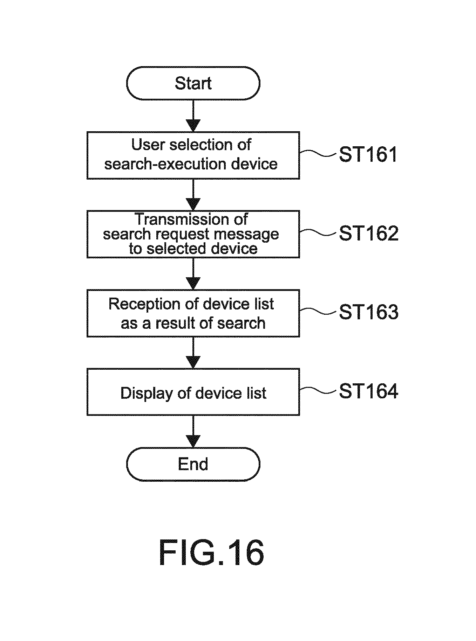

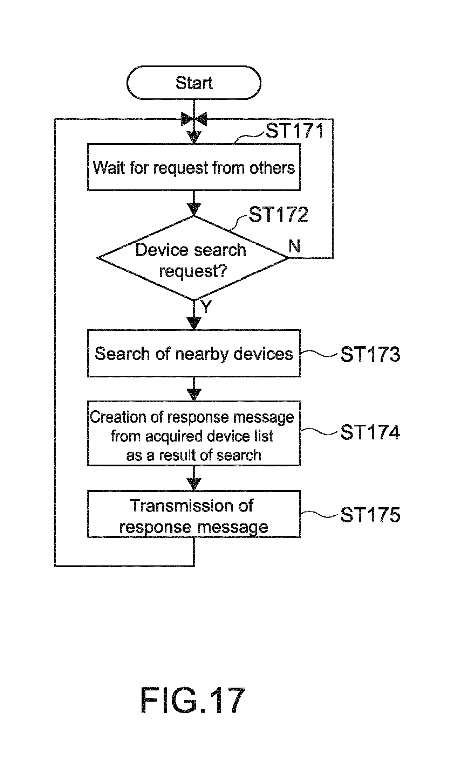

Figs. 15A to 15C are each a diagram showing an exemplary user interface in the association setting process using such a remote search request mechanism. In Figs. 15A to 15C, the user interface in use is basically the same as that in Figs. 10A and 10B. Figs. 16 and 17 are process flowcharts respectively of the user-side device 200 and of the registered setting-target device 300 for the association settings.

As shown in Fig. 15A, assuming here is a case where the user of the user-side device 200 selects the TV in his grandpa's house from the registered devices displayed in the area 102 of the device list display/selection section 27 (step 161 of Fig. 16).

In response thereto, as shown in Fig. 15B, detailed information about the selected TV in the grandpa's house appears with a button for a search for devices near the TV.

When the user depresses the button, the user-side device 200 sends a device search request message to the selected TV, i.e., the registered setting-target device 300 (step 162 of Fig. 16).

The TV then waits for a request from other devices (step 171 of Fig. 17), and when the TV receives the device search request described above (Yes in step 172 of Fig. 17), starts a device search therearound (within the home network 10) (step 173 of Fig. 17).

The TV then obtains a device list as a result of the device search, and creates a response message with respect to the device search request including the device list (step 174 of Fig. 17).

The TV then transmits the response message created as such to the user-side device 200 (step 175 of Fig. 17).

Upon reception of the device list in the response message (step 163 of Fig. 16), as shown in Fig. 15C, the user-side device 200 displays a list of the devices found near the TV in the grandpa's house (step 164 of Fig. 16). Thereafter, by the user selecting the image of any of the devices in the area 101 for the association settings, the association setting process is performed similarly to that in the embodiments described above.

### [Fifth Embodiment]

Described next is a fifth embodiment of the present technology.

In the fourth embodiment described above, the user-side device 200 is capable of making a search for nearby devices via any registered device, e.g., the setting-target device 300. However, such a device search is the one made merely based on the network topology.

In the real-world environment, a device search may be expected to be made in a more user-friendly manner no matter with which network topology or network type in use, e.g., a user may want to find devices nearby a position specified based on position information.

In order to be ready for such expectations, in the fifth embodiment, the server 100 on the cloud is provided with the function for a device search. Alternatively, another server for a device search may be provided separately from the server 100.

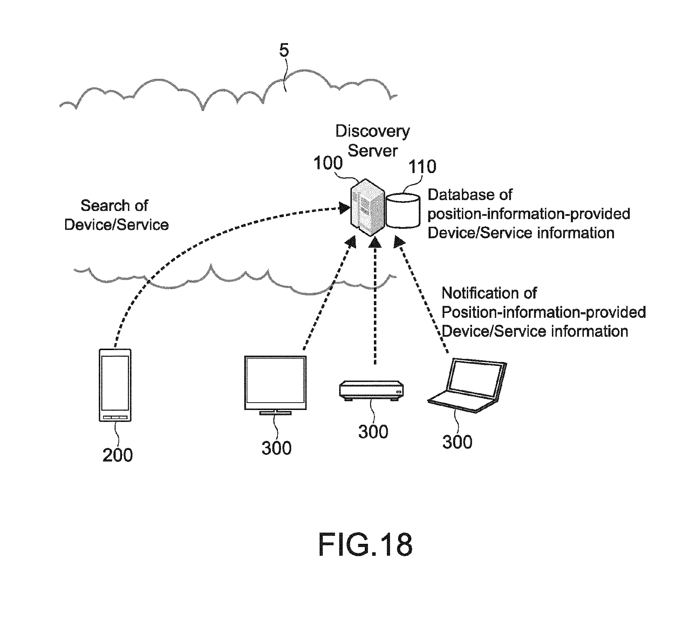

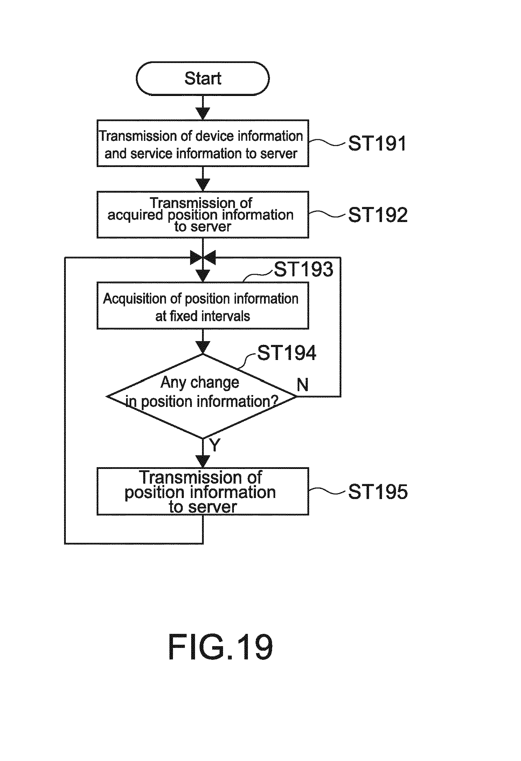

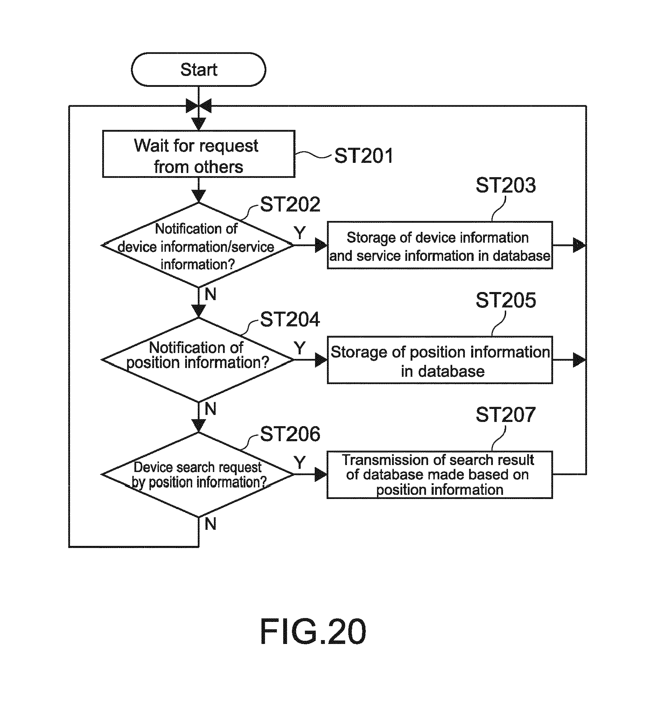

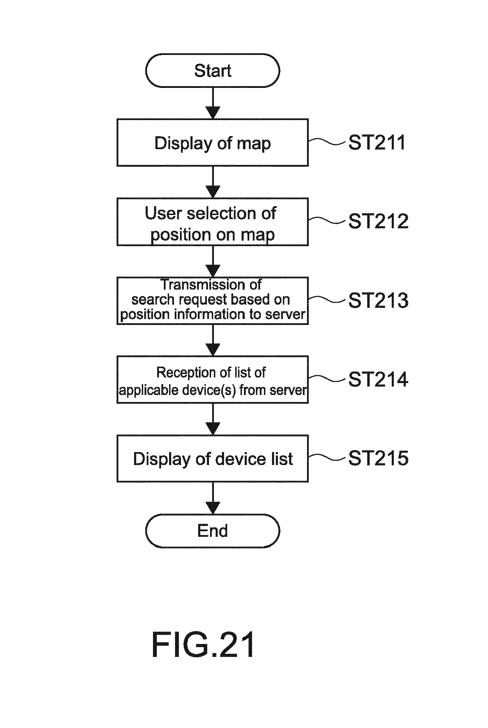

Fig. 18 is a schematic view of a system in such a case. Fig. 19 is a process flowchart of the setting-target device 300 in this embodiment, Fig. 20 is a process flowchart of the server 100 herein, and Fig. 21 is a process flowchart of the user-side device 200 herein. As shown in Fig. 18, the server 100 is provided with a database 110 for storage of information, i.e., position information about devices (the setting-target devices 300) and device information/service information.

As shown in Fig. 18, the setting-target device 300 sends its own device information and service information to the server 100 (step 191 of Fig. 19). In this example, the device information is, e.g., a device ID, and the service information is a service name, e.g., "VideoStreaming".

The setting-target device 300 obtains its own position information, and sends the position information to the server 100 (step 192 of Fig. 19). The position information includes position information obtained by a GPS (Global Positioning System) sensor (not shown) in the setting-target device 300, information about wireless LAN access points, or information about electric field strength, e.g., PlaceEngine, for example.

Thereafter, the setting-target device 300 obtains its own position information at regular intervals (step 193 of Fig. 19). When determining that the position information shows a change, the setting-target device 300 notifies the server 100 of the position information after the change, and then updates the position information (steps 194 and 195 of Fig. 19).

The server 100 waits for a request from other devices (step 201 of Fig. 20), and when the server 100 receives a request, determines whether the request is the notification of device information/service information from the setting-target device 300 or not (step 202 of Fig. 20).

When the request is the notification of device information/service information (Yes in step 202), the server 100 stores the device information and the service information in the database 110 (step 203 of Fig. 20).

When determining that the request is not the notification of device/service information (No in step 202), the server 100 then determines whether the request is the notification of position information from the setting-target device 300 or not (step 204 of Fig. 20).

When determining that the request is the notification of position information (Yes in step 204), the server 100 stores the position information in the database 110 (step 205 of Fig. 20).

The user-side device 200 displays a map on the device list display/selection section 27 (step 211 in Fig. 21), and accepts the user's arbitrary position selection on the map (step 212 of Fig. 21). The map is downloaded from the Internet every time for the use.

Based on the selected position, the user-side device 200 creates a device search request asking for a search for devices near the position, and sends the created request to the server 100 (step 213 of Fig. 21). Herein, the device search request includes position information about the selected position as above, but alternatively, may include information specifying the distance from the selected position. Still alternatively, the device search request may also include information that specifies the maximum number of devices to be found relative to the selected position, i.e., the maximum number of devices to be listed in the list.

When determining that the received request is the device search request from the user-side device 200 including the position information (Yes in step 206 of Fig. 20), the server 100 searches the database 110 for nearby devices based on the position information in the device search request. Based on the search result, the server 100 then creates a device list including the device IDs of the devices found near the position indicated by the position information, and transmits the list to the user-side device 200 (step 207 of Fig. 20).

Upon reception of the device list (step 214 of Fig. 21), the user-side device 200 displays the list on the device list display/selection section 27 (step 215 of Fig. 21).

After the reception of the device list, the user-side device 200 is ready to go through the association setting process by transmitting an association setting request to any user-desired device using the device IDs.

With the processing as above, the user-side device 200 goes through the association setting process with any devices found by a device search with no restrictions of the network topology. Herein, as described in the third embodiment above, the distinction may not be made between the user-side device 200 and the setting-target device 300.

### [Sixth Embodiment]

Described next is a sixth embodiment of the present technology.

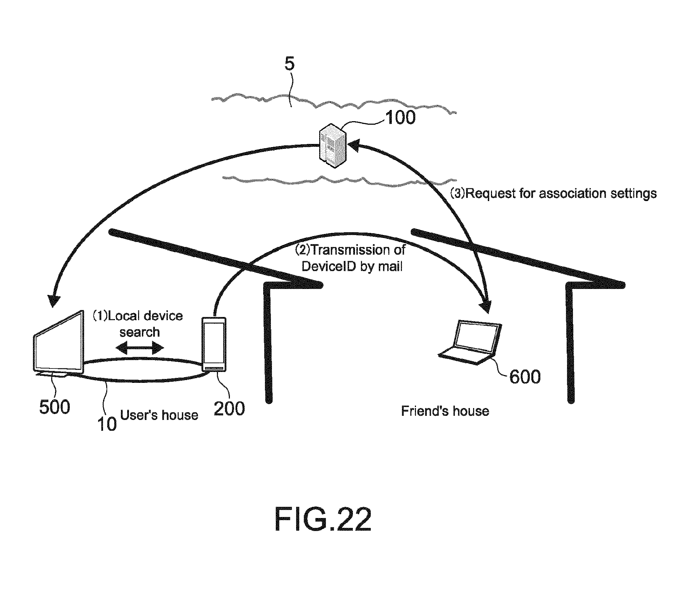

FIG. 22 is a schematic view of an association setting system in the sixth embodiment.

As described in the embodiments above, the environment of implementing device-to-device linkages with no restraint is achieved by the user-side device 200 establishing association with other devices (the setting-target devices 300) using the association setting mechanism described above as long as the device IDs of the devices are available. These device IDs are not necessarily found by the operation of a device search, and may be explicitly obtained by a user by some means. If the device IDs obtained as such are used for the association settings, the resulting setting mechanism may be more flexible.
In consideration thereof, in the system of this embodiment, the device IDs are exchanged between devices by E-mail as shown in Fig. 22.

As shown in FIG. 22, first of all, a user of the user-side device 200, e.g., smartphone, obtains the device ID of a device nearby, e.g., TV 500, by a local device search using the user-side device 200 in the user's house ((1) in Fig. 22).

The user then sends the device ID (or a list thereof) obtained as such to his friend's device, e.g., PC 600, by attaching it to an E-mail ((2) in Fig. 22). When the user notifies the friend of the device ID of the user-side device 200 owned by the user, the device search as above is surely not performed.

After receiving the E-mail as above, the user's friend transmits an association setting request via the server 100 based on the obtained device ID of the setting-target device, e.g., TV 500 ((3) in FIG. 16).

With such processes, the user's friend's PC 600 becomes accessible to the TV 500 in the user's house. This enables streaming of video contents from the PC 600 for viewing by the user and the friend at the same time, for example.

Exemplified in the above is the case of exchanging the device ID by E-mail, but the device ID may be exchanged using other tools and services such as Web server, SNS (Social Networking Service), BLOG, or Twitter (trademark). As an example, a user may upload on the SNS a list of device IDs in his house to show it to his friend, thereby providing the friend with access authority to the devices in his house.

### [Seventh Embodiment]

Described next is a seventh embodiment of the present technology.

In the first embodiment described above, when an association setting request is sent by the user-side device 200 with a specified type (e.g., any of four types) for user/device association establishment, the setting-target device 300 is allowed only to accept the type or not.

However, assuming that the setting-target device 300 receives an association setting request from the user-side device 200 with a specified user type of "Owner", the user of the setting-target device 300, who recognizes the notification for acceptance of the request, may accept the request not with the specified user type of "Owner" but with the user type of "Guest" for access.

If this is the case, the user of the user-side device 200 may sequentially transmit the requests each with the different user type of "Owner", "Family", "Friend", or "Guest", for example. However, this is not user-friendly on both ends because the user of the setting-target device 300 may respond to accept the request with the specified type of "Guest" after responding to reject one by one the requests with the specified types of "Owner", "Family", and "Friend".

With the aim of simplifying the user operation on both ends, in this embodiment, the user of the setting-target device 300 is allowed to additionally attach an association setting response with a list of user types he may accept.

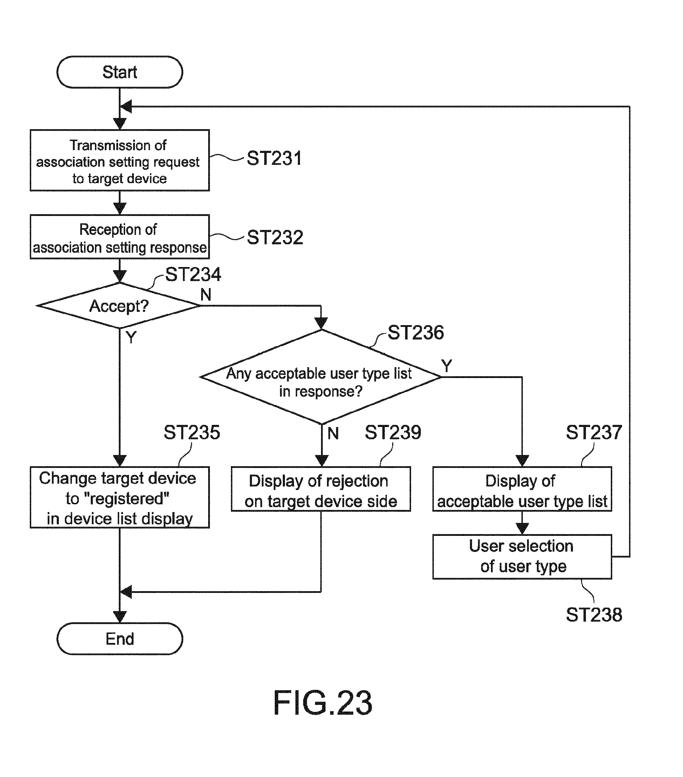

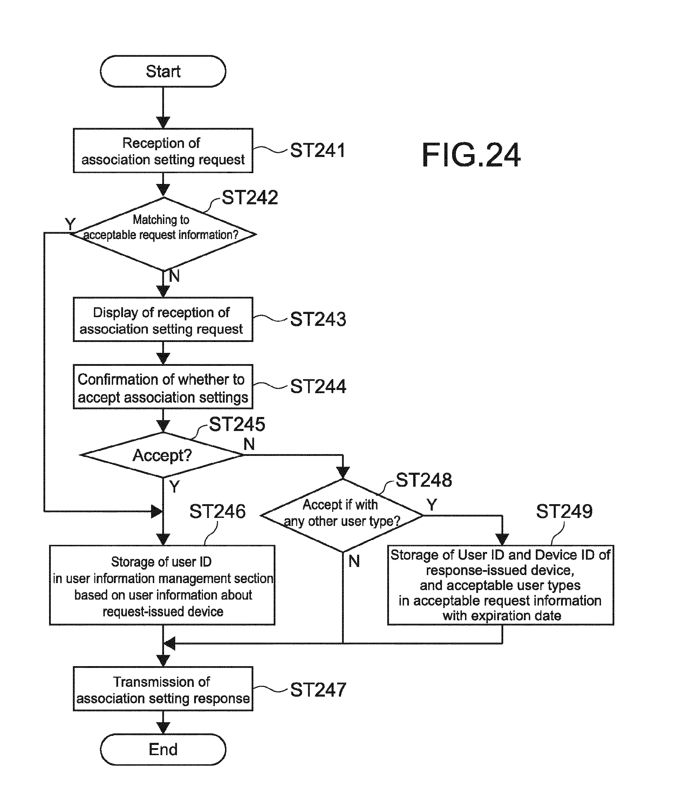

Fig. 23 is a process flowchart of the user-side device 200 in this embodiment, and FIG. 24 is a process flowchart of the setting-target device 300 in this embodiment.

First of all, the user-side device 200 sends a user-type-specified association setting request to the setting target device 300 via the server 100 (step 231 of Fig. 23).

On the other end, the setting-target device 300 stores in advance information about which user types the user thereof may accept. Thereafter, upon reception of the association setting request (step 241 of Fig. 24), the setting-target device 300 determines whether the user type specified in the request is found in the user types the user thereof may accept (step 242 of Fig. 24).

When determining that the user type specified in the request is found in the user types the user thereof may accept (Yes in step 242), based on the user information about the user-side device 200 where the request is issued, the setting-target device 300 stores the user ID of the user-side device 200 in the user information management section 38 described above (step 246). The setting-target device 300 then transmits a response to accept the association setting request to the user-side device 200 via the server 100 (step 247 of Fig. 24).

When determining that the user type specified in the request is not found in the user types the user thereof may accept (No in step 242), the setting-target device 300 displays such a message as shown in Fig. 9B on the association setting request display/confirmation section 36 for asking the user to accept the request (step 243 of Fig. 24). Together with the message, the setting-target device 300 displays buttons on the association setting request display/confirmation section 36 (step 244 of Fig. 24). The buttons are those corresponding to choices of "accept" "accept if with any other user type", and "reject", for example.

When the user selects the button of "accept" (Yes in step 245), the setting-target device 300 stores the user ID of the user-side device 200, and transmits a response to accept the association setting request (steps 246 and 247 of Fig. 24).

When the user selects the button of "reject" (No in step 248), the setting-target device 300 transmits a response to reject the request (step 247 of Fig. 24).

When the user selects the button of "accept if with any other user type" (Yes in step 248), the setting-target device 300 displays a screen on the association setting request display/confirmation section 36 for the user to select the user types he or she may accept.

Based on the user type selected on the screen, the setting-target device 300 creates acceptable request information, and stores the information in the user information management section 38 with an expiration date (step 249 of Fig. 24). The acceptable request information includes the user and device IDs of the device where the request is issued, and a list of acceptable user types.

The setting-target device 300 then transmits an association setting response together with the acceptable request information created as above (step 247 of Fig. 24).

On the other end, upon reception of the association setting response (step 232 of Fig. 23), the user-side device 200 determines whether the response is to accept the association setting request or not (step 234 of Fig. 23).

When determining that the response is to accept the request (Yes in step 234), the user-side device 200 displays differently the image of the setting-target device 300 as the registered device on the device list display/selection section 27 (step 235 of Fig. 23).

When determining that the response is to reject the request (No in step 234), the user-side device 200 determines whether the response includes the list of acceptable user types described above (step 236 of Fig. 23).

When determining that the response includes the list of acceptable user types (Yes in step 236), the user-side device 200 displays the list on the device list display/selection section 27 (step 237 of Fig. 23).

On the list displayed as such, the user-side device 200 then accepts the user's user type selection (step 238 of Fig. 23), and transmits again the association setting request this time with the specified user type (step 231 of Fig. 23).

When determining that the response does not include the list of acceptable user types (No in step 236), the user-side device 200 displays the response to rejection on the device list display/selection section 27 (step 239 of Fig. 23).

With such processes, the user type is determined by negotiations between the user-side device 200 and the setting-target device 300.

### [Conclusion]

As described above, according to the present technology, with the minimum number of input of user ID and password, the association settings are accordingly made for association establishment between a user and devices aiming for the server-to-device and device-to-device linkages without impairing the security level.

With the recent widespread use of mobile terminals such as smartphone, everyone is expected to carry around a device furnished with personal identifiable information and extremely high communication functions. With the present technology in such an environment, each user is offered an opportunity to make association settings with any necessary device only by transmitting an association setting request whenever the user feels like doing it with his terminal in hand as if to find supportive friends. Moreover, for users who have hesitated to use the device-to-device linkage functions due to the association settings that have been difficult, the linkage functions become accessible thanks to the present technology.

What is more, a whole category of devices are handled in a unified manner for the association settings not only to devices in each house but also to devices in relatives' and friends' houses or to devices on the street. This accordingly implements the infrastructural environment for cloud/device linkages and device-to-device linkages.

In the cloud environment, as alternatives to the previous services based on access via a browser, the recent services are almost at the advanced stage of providing the user convenience with the accessibility by a whole category of devices in the world, and with a large number of devices in combination for operations. In such an environment, the present technology is with a very high use value.

### [Modification Examples]

The present technology is not restricted to the embodiments described above, and numerous other modifications and variations are devised without departing from the scope of the present disclosure.

Exemplified in the embodiments described above is the case that the devices are in communication via the server 100, and the information about the user/device association is stored in the server 100. Alternatively, the association settings may be made not via the server 100 but by direct exchange of messages between devices as temporary settings when no connection is available with the server 100, for example.

Further, in the embodiments described above, the device-base security mechanism is a precondition for the base of the association setting mechanism. However, especially when there is no concern about the security, or when the security is remained high with some other means, the device-base security mechanism may not be used.

In the embodiments described above, the server 100 stores thereon the image data corresponding to the device IDs, and information about device names, for example. However, such information may be stored on any other server, or on the user-side device 100 or the setting-target device 300 in advance.

In the embodiments described above, when receiving an association setting request, the setting-target device 300 displays the request to ask the user for acceptance. However, with any device having only the display function like a TV and being available for anyone, the settings may be made in advance to accept the request at all times without the process of asking the user for acceptance.

The configurations of the first to seventh embodiments described above may be combined freely as long as no contradiction occurs thereby.

In the embodiments described above, the user-side device 200 is exemplified by a smartphone, and the setting-target device 300 is exemplified by a digital photo frame. Such device types are surely not restrictive, and a whole category of information processing apparatuses is the target of the present technology, e.g., mobile phone, tablet PC, PDA, portable AV player, electronic book, digital photo frame, TV, PVR, notebook PC, desktop PC, HDD device, camcorder, digital camera, game machine, projector, healthcare device, and household appliances.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

The present technology is also possibly in the following structures.
(1) An information processing apparatus, comprising:
   a communication section configured to be connectable to a first network and a second network; and
   a control section configured to be able to control the communication section
      to establish a safe communication path with a server apparatus connected to the first network, and to transmit user identification information and first device identification information to the server apparatus for registration in the server apparatus, the user identification information identifying a user of the information processing apparatus, the first device identification information identifying the information processing apparatus,
      to make a search for at least one device connected to the second network, and to receive second device identification information identifying the device,
      to transmit, to the server apparatus, together with the received second device identification information, setting request information asking the at least one device for association settings between the information processing apparatus and the at least one device, and
      to receive, from the server apparatus, response information transmitted by the device in response to the setting request information.
(2) The information processing apparatus according to (1), further comprising:
   a display section; and
   an operation accepting section configured to accept an operation of the user, wherein
   the control section is configured to be able to control
      the display section to display information about the at least one device found by the search,
      the communication section to transmit the setting request information when an operation is accepted for selecting a target device from the displayed information for transmission of the setting request information, and
      the display section to, when the response information is received, change a display state of information about the selected device.
(3) The information processing apparatus according to (2), wherein
   the control section is configured to be able to control
   the display section to display a plurality of pieces of type information each indicating an association type with the device, and
   the communication section to, when an operation is accepted for making a selection of one piece of type information from the displayed plurality of pieces of type information, transmit the setting request information together with the selected type information.
(4) The information processing apparatus according to (3), wherein
   the control section is configured to be able to control
   the display section to display a first area displaying an object indicating the at least one device found by the search, and a second area provided to each of the association types, and
   the communication section to, when an operation of drag-and-drop is accepted for the object displayed in the first area to the second area, transmit the setting request information together with the type information indicating the association type corresponding to the second area.
(5) The information processing apparatus according to any one of (1) to (4), wherein
   the control section is configured to be able to control the communication section
   to transmit, in a case where a device done with the association settings is connected to a third network other than the first network and the second network, search request information, the search request information asking the device to make a search for another device connected to the third network, and if found, to send back device identification information about the other device,
   to receive the device identification information about the other device sent by the device in response to the search request information, and
   to transmit, to the server apparatus, together with the received device identification information about the other device, setting request information asking the other device for the association settings between the information processing apparatus and the other device.
(6) The information processing apparatus according to any one of (1) to (5), wherein
   the server apparatus is configured
   to receive, from another device connected to a third network other than the first network and the second network, position information about the other device and device identification information about the other device, and
   to store the position information and the device identification information, and
   the control section is configured to be able to control the communication section
   to transmit, to the server apparatus, search request information asking for a search for a device near a position indicated by the position information,
   to receive device identification information about a device found near the position, the identification information being transmitted by the server apparatus in response to the search request information, and
   to transmit, to the server apparatus, together with the received device identification information, the setting request information asking the device near the position for the association settings between the information processing apparatus and the device near the position.

The present disclosure contains subject matter related to that disclosed in Japanese Priority Patent Application JP 2011-131293 filed in the Japan Patent Office on June 13, 2011, the entire content of which is hereby incorporated by reference.

It should be understood by those skilled in the art that various modifications, combinations, sub-combinations and alterations may occur depending on design requirements and other factors insofar as they are within the scope of the appended claims or the equivalents thereof.

## Claims

1. An information processing apparatus, comprising:
a communication section configured to be connectable to a first network and a second network; and
a control section configured to be able to control the communication section
to establish a safe communication path with a server apparatus connected to the first network, and to transmit user identification information and first device identification information to the server apparatus for registration in the server apparatus, the user identification information identifying a user of the information processing apparatus, the first device identification information identifying the information processing apparatus,
to make a search for at least one device connected to the second network, and to receive second device identification information identifying the device,
to transmit, to the server apparatus, together with the received second device identification information, setting request information asking the at least one device for association settings between the information processing apparatus and the at least one device, and
to receive, from the server apparatus, response information transmitted by the device in response to the setting request information.

2. The information processing apparatus according to claim 1, further comprising:
a display section; and
an operation accepting section configured to accept an operation of the user, wherein
the control section is configured to be able to control
the display section to display information about the at least one device found by the search,
the communication section to transmit the setting request information when an operation is accepted for selecting a target device from the displayed information for transmission of the setting request information, and
the display section to, when the response information is received, change a display state of information about the selected device.

3. The information processing apparatus according to claim 2, wherein
the control section is configured to be able to control
the display section to display a plurality of pieces of type information each indicating an association type with the device, and
the communication section to, when an operation is accepted for making a selection of one piece of type information from the displayed plurality of pieces of type information, transmit the setting request information together with the selected type information.

4. The information processing apparatus according to claim 3, wherein
the control section is configured to be able to control
the display section to display a first area displaying an object indicating the at least one device found by the search, and a second area provided to each of the association types, and
the communication section to, when an operation of drag-and-drop is accepted for the object displayed in the first area to the second area, transmit the setting request information together with the type information indicating the association type corresponding to the second area.

5. The information processing apparatus according to claim 1, wherein
the control section is configured to be able to control the communication section
to transmit, in a case where a device done with the association settings is connected to a third network other than the first network and the second network, search request information, the search request information asking the device to make a search for another device connected to the third network, and if found, to send back device identification information about the other device,
to receive the device identification information about the other device sent by the device in response to the search request information, and
to transmit, to the server apparatus, together with the received device identification information about the other device, setting request information asking the other device for the association settings between the information processing apparatus and the other device.

6. The information processing apparatus according to claim 1, wherein
the server apparatus is configured
to receive, from another device connected to a third network other than the first network and the second network, position information about the other device and device identification information about the other device, and
to store the position information and the device identification information, and
the control section is configured to be able to control the communication section
to transmit, to the server apparatus, search request information asking for a search for a device near a position indicated by the position information,
to receive device identification information about a device found near the position, the identification information being transmitted by the server apparatus in response to the search request information, and
to transmit, to the server apparatus, together with the received device identification information, the setting request information asking the device near the position for the association settings between the information processing apparatus and the device near the position.

7. A server apparatus, comprising:
a communication section configured to be connectable to a first network; and
a control section configured to be able to control the communication section
to establish a safe communication path with an information processing apparatus connected to the first network, and to receive user identification information and first device identification information from the information processing apparatus for registration in the server apparatus, the user identification information identifying a user of the information processing apparatus, the first device identification information identifying the information processing apparatus,
to receive, from the information processing apparatus, second device identification information and setting request information, the second device identification information identifying at least one device found by the information processing apparatus through a search for devices connected to a second network different from the first network, the second device identification information being obtained by the information processing apparatus, the setting request information asking the at least one device for association settings between the information processing apparatus and the at least one device,
to transmit the received setting request information to the at least one device,
to receive response information transmitted from the at least one device in response to the setting request information, and
to transmit the received response information to the information processing apparatus.

8. An information processing method in an information processing apparatus, comprising:
establishing a safe communication path with a server apparatus connected to a first network, and transmitting user identification information and first device identification information to the server apparatus for registration in the server apparatus, the user identification information identifying a user of the information processing apparatus, the first device identification information identifying the information processing apparatus;
receiving second device identification information identifying at least one device connected to a second network different from the first network found through a search;
transmitting, to the server apparatus, together with the received second device identification information, setting request information asking the at least one device for association settings between the information processing apparatus the at least one device; and
receiving, from the server apparatus, response information transmitted by the at least one device in response to the setting request information.

9. A program causing an information processing apparatus:
to establish a safe communication path with a server apparatus connected to a first network, and to transmit user identification information and first device identification information to the server apparatus for registration in the server apparatus, the user identification information identifying a user of the information processing apparatus, the first device identification information identifying the information processing apparatus;
to receive second device identification information identifying at least one device connected not to a second network different from the first network found through a search;
to transmit, to the server apparatus, together with the received second device identification information, setting request information asking the at least one device for association settings between the information processing apparatus the at least one device; and
to receive, from the server apparatus, response information transmitted by the at least one device in response to the setting request information.
